**Europäisches Patentamt**

**European Patent Office**

**Office européen des brevets**

(19)

(11) Veröffentlichungsnummer : **0 161 646**
**B1**

(12)

# EUROPÄISCHE PATENTSCHRIFT

(45) Veröffentlichungstag der Patentschrift :
09.11.88

(21) Anmeldenummer : 85105773.7

(22) Anmeldetag : 10.05.85

(51) Int. Cl.⁴ : **H 02 P 7/18**, H 02 P 7/62

(54) **Elektrischer Motor mit veränderlicher Drehzahl.**

(30) Priorität : 14.05.84 DE 3417894

(43) Veröffentlichungstag der Anmeldung :
21.11.85 Patentblatt 85/47

(45) Bekanntmachung des Hinweises auf die Patenterteilung : 09.11.88 Patentblatt 88/45

(84) Benannte Vertragsstaaten :
DE FR GB IT SE

(56) Entgegenhaltungen :
GB-A- 389 801
GB-A- 421 694
GB-A- 856 760
US-A- 1 694 637
US-A- 2 254 899
US-A- 2 331 960

(73) Patentinhaber : Siemens Aktiengesellschaft Berlin
und München
Wittelsbacherplatz 2
D-8000 München 2 (DE)

(72) Erfinder : Rosenberg, Heinz, Dipl.-Ing.
Dr. Fidler-Weg 15
A-2752 Wöllersdorf (AT)

EP 0 161 646 B1

## Beschreibung

Die Erfindung betrifft einen elektrischen Motor mit veränderlicher Drehzahl, dem ein über wenigstens einen fallweise veränderbaren frequenzabhängigen Widerstand mit Wechselspannung von einer der Motordrehzahl verhältnisgleichen Frequenz gespeister Gleichrichter zugeordnet ist und dessen Erregung durch den von dem Gleichrichter gelieferten Strom gesteuert ist.

Ein solcher Motor ist durch die US-A-2 331 960 bekannt. Zur Drehzahlregelung ist bei diesem Motor eine zusätzliche Erregerwicklung vorgesehen, die an einen Gleichrichter angeschlossen ist, der über ein Reihen-LC-Glied von einem mit dem Motor gekuppelten Generator, von einer separaten Ankerwicklung oder von geeigneten Anschlüssen einer einzigen Ankerwicklung gespeist wird. Hierdurch wird eine steile Charakteristik des Erregerstromverlaufes in der zusätzlichen Erregerwicklung in bezug auf Drehzahländerungen erreicht, d. h. eine geringe Drehzahländerung führt zu einer starken Änderung des Erregerstromes in der zusätzlichen Erregerwicklung. Ein solcher Motor besitzt somit eine hohe Drehzahlstabilität.

Durch die US-A-1 694 637 ist ein von einem Gleichstrommotor angetriebener Generator bekannt. Zur Drehzahlregelung des Generators ist der im Nebenschluß arbeitende Gleichstrommotor mit einer Hilfserregerwicklung versehen, die über einen Gleichrichter von einem über einen veränderbaren frequenzabhängigen Blindwiderstand an den Generator angeschlossenen Transformator gespeist wird. Bei Drehzahländerungen ändert der Blindwiderstand seinen Widerstand, so daß sich auch der Strom in der Primärwicklung des Transformators entsprechend ändert. Damit erhält die Hilfserregerwicklung einen von Drehzahländerungen abhängigen Strom zugeführt. Durch diese Zusatzerregung wird der Motor jeweils wieder auf die gewünschte Drehzahl geregelt.

Zur Drehzahlregelung eines Motors ist es aus der GB-A-389 801 ferner bekannt, von der Ankerwicklung des Motors eine Spannung abzugreifen und der Primärwicklung eines Transformators zuzuführen, an dessen Sekundärseite über die eine Spule einer Drossel ein Gleichrichter angeschlossen ist, der eine Induktionswicklung des Motors speist. Die andere Spule der Drossel liegt an der Speisespannung des Motors. Durch Änderungen der Speisespannung ergeben sich entsprechende Drehzahländerungen des Motors. Diese Spannungsänderungen verursachen jedoch auch entsprechende Änderungen der Induktivität der Drossel, so daß letztlich die Induktionswicklung einen von den Spannungsänderungen abhängigen Strom erhält und dadurch die Drehzahl des Motors auf einen konstanten Wert geregelt wird.

Eine weitere Anordnung zur Konstanthaltung der Drehzahl eines elektrischen Motors ist durch die US-A-2 254 899 bekannt. Bei dieser Anordnung ist mit dem Motor ein Generator gekuppelt,

der eine Wechselspannung mit einer der Motordrehzahl proportionalen Frequenz liefert. Diese Wechselspannung wird mittels eines Gleichrichters gleichgerichtet und speist eine ausgangsseitig an den Gleichrichter angeschlossene Hilfserregerwicklung des Motors. Eingangsseitig liegt mit dem Gleichrichter die Hauptwicklung einer einen dreischenkeligen Magnetkern aufweisenden Drossel in Reihe. Auf dem mittleren Schenkel des Magnetkerns sind weitere Wicklungen angeordnet, die über einen Kondensator bzw. über eine Induktivität an den Generator angeschlossen sind. Somit wird in dem Magnetkern ein von der Frequenz der Generatorspannung abhängiger Fluß erzeugt, der einen entsprechenden Strom in der Hauptwicklung und damit in der Hilfserregerwicklung zur Folge hat. Auf diese Weise wird die Erregung des Motors so gesteuert, daß sich eine konstante Drehzahl einstellt.

Der Erfindung liegt die Aufgabe zugrunde, einen Motor zu schaffen, bei dem ein gewünschter Verlauf der induzierten Spannung über der Drehzahl ohne Regler erzielt ist.

Die Lösung dieser Aufgabe gelingt durch die im Kennzeichen des Anspruches 1 angegebenen Merkmale. Ausführungsarten sind in den abhängigen Ansprüchen beschrieben.

Der Erfindung liegt die Erkenntnis zugrunde, daß der durch die US-A-2 331 960 bekannte Motor durch geeignete Dimensionierung des Erregerkreises in vorteilhafter Weise auch für eine Feldschwächsteuerung abgewandelt werden kann. Hierdurch wird z. B. bei Motoren, die von einem Stromrichter gespeist und über einen größeren Drehzahlbereich mit annähernd gleichbleibender Leistung betrieben werden (z. B. Fahrmotoren und Antriebsmotoren von Werkzeugmaschinen), die Typenleistung des Stromrichters beschränkt.

Anhand mehrerer in der Zeichnung dargestellter Ausführungsbeispiele wird die Erfindung nachfolgend näher erläutert. Es zeigt :

Fig. 1 eine Prinzipschaltung mit Speisung des Gleichrichters über einen induktiven Blindwiderstand,

Fig. 2 eine Prinzipschaltung mit Speisung des Gleichrichters über einen kapazitiven Blindwiderstand (Kondensator),

Fig. 3 eine Prinzipschaltung mit Speisung des Gleichrichters über hintereinandergeschaltete induktive und kapazitive Blindwiderstände,

Fig. 4 eine Prinzipschaltung mit Speisung des Gleichrichters über parallelgeschaltete induktive und kapazitive Blindwiderstände,

Fig. 5 eine Prinzipschaltung mit Speisung des Gleichrichters und eines ihm parallelgeschalteten induktiven Blindwiderstandes über einen Kondensator,

Fig. 6 eine Prinzipschaltung mit Speisung des Gleichrichters und eines ihm parallelgeschalteten Kondensators über einen induktiven Blindwiderstand,

Fig. 7 eine Schaltung eines Gleichstrommotors mit bei steigender Drehzahl zunehmender Feldschwächung,

Fig. 8 eine andere Schaltung eines Gleichstrommotors, bei dem die Feldschwächung erst bei einer Mindestdrehzahl einsetzt,

Fig. 9 die Schaltung eines Drehstrom-Synchronmotors mit ebenfalls von einer Mindestdrehzahl aufwärts erfolgenden Feldschwächung,

Fig. 10 die Schaltung eines im Läufer permanentmagneterregten Drehstrom-Synchronmotors mit bei steigender Drehzahl zunehmender Schwächung seines Nutzflusses.

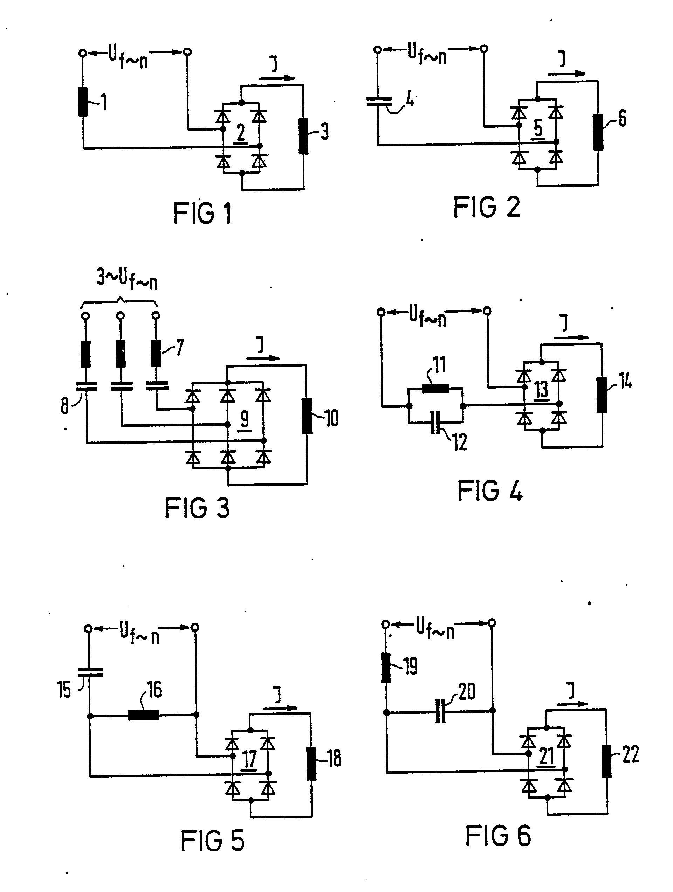

In den Fig. 1 bis 6 sind prinzipielle Schaltungen von Blindwiderständen dargestellt, die jeweils zur Erzeugung eines von der Frequenz der speisenden Spannung abhängigen Stromes dienen. Um die Wirkungsweise der Blindwiderstände zu verdeutlichen, wird bei den nachstehenden Erläuterungen der Fig. 1 bis 6 die den Gleichrichter speisende Spannung U, deren Frequenz f der Maschinendrehzahl n verhältnisgleich ist, konstant vorausgesetzt, was jedoch bei den Anwendungsformen nicht immer der Fall zu sein braucht.

Bei der Schaltung nach Fig. 1 wächst der induktive Blindwiderstand 1 mit der Frequenz f. Der in den Gleichrichter 2 eingespeiste Strom und daher auch der an die Maschinenwicklung 3 gelieferte Gleichstrom J nehmen mit steigender Maschinendrehzahl n monoton ab. Demgemäß ändert sich die den magnetischen Nutzfluß der Maschine erregende oder beeinflussende Durchflutung dieser Wicklung 3 im Gegensinn zur Drehzahl n.

Bei der Anordnung nach Fig. 2 wächst hingegen durch die mit steigender Frequenz erfolgende Abnahme des Blindwiderstandes des Kondensators 4 der vom Gleichrichter 5 an die Maschinenwicklung 6 abgegebene Strom J mit der Maschi-nendrehzahl.

In Fig. 3 bilden die induktiven Blindwiderstände 7 und die Kondensatoren 8 zusammen einen dreiphasigen Blindwiderstand, der zunächst mit steigender Frequenz abnimmt, bei der Resonanzfrequenz verschwindet und von da an mit der Frequenz wieder wächst. Der Strom J, den der Gleichrichter 9 an die Maschinenwicklung 10 abgibt, wächst demnach mit der Drehzahl n bis zu einem Resonanzmaximum und sinkt dann wieder.

Die parallelgeschalteten Blindwiderstände 11 und 12 in Fig. 4 ergeben zusammen einen mit steigender Frequenz zunächst wachsenden Blindwiderstand, also eine Abnahme des vom Gleichrichter 13 an die Maschinenwicklung 14 gelieferten Stromes. Bei der Resonanzfrequenz bilden die Blindwiderstände 11 und 12 einen Sperrkreis, so daß der Strom J praktisch verschwindet, um mit weiterer Frequenzzunahme wieder monoton anzusteigen.

Bei der Schaltung nach Fig. 5 speist die Spannung U über den Kondensator 15 den Gleichrichter 17 und den zu ihm parallelgeschalteten induktiven Blindwiderstand 16. Diese Schaltung ergibt einen ähnlichen Verlauf des vom Gleichrichter 17 an die Maschinenwicklung 18 abgegebenen Stromes J über der Drehzahl n wie die Anordnung nach Fig. 3. Nach Überschreitung der Resonanzfrequenz nimmt jedoch hier der Strom weniger stark ab als bei der Schaltungsanordnung nach Fig. 3.

In der Anordnung nach Fig. 6 ist dem Gleichrichter 21 und dem zu ihm parallelgeschalteten Kondensator 20 der induktive Blindwiderstand 19 vorgeschaltet. Auch diese Anordnung ergibt ähnlich wie die Schaltungen nach den Fig. 3 und 5 einen mit der Frequenz bis zu einem Maximum ansteigenden und dann wieder sinkenden Strom J in der Maschinenwicklung 22. Zum Unterschied von den letztgenannten Anordnungen ist jedoch hier schon bei f = 0 bereits der Strom J > 0 und verschwindet dafür bei einem gewissen Frequenzwert oberhalb der Resonanzfrequenz praktisch vollkommen.

Um die Zuordnung des Stromes J zur Drehzahl n einem gewünschten Verlauf anzupassen, kann bei allen Schaltungen zumindest einem der Blind-widerstände ein ohmscher Widerstand parallelge-schaltet werden. Der Deutlichkeit halber wurde dies in den Fig. 1 bis 6 nicht dargestellt.

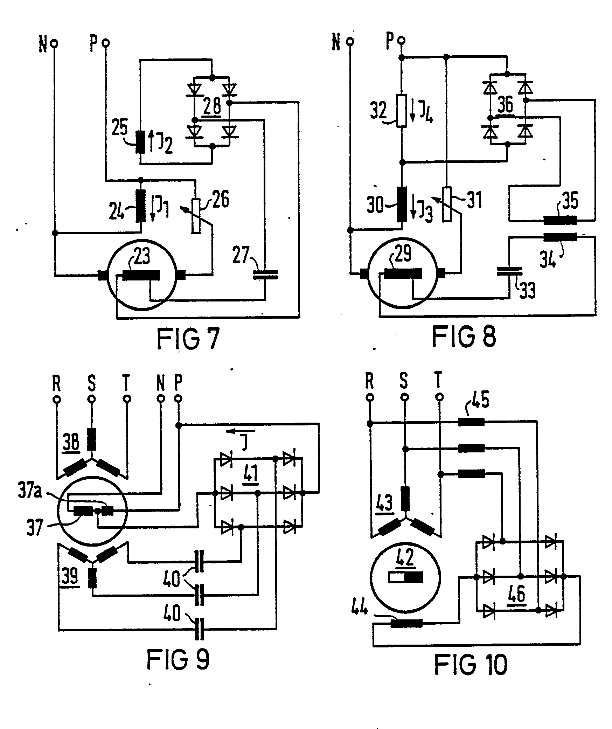

Die Fig. 7 zeigt eine Schaltung eines selbsttätig mit Feldschwächung arbeitenden Gleichstrommotors. Der Spannung in der Ankerwicklung 23 des Motors induzierende Magnetfluß wird von einer Erregerwicklung 24 erzeugt, die im Nebenschluß zum Anker liegt und den Strom $J_1$ führt. Die dem Motor über die Klemmen N, P zugeführte Gleichspannung sei konstant. Daher ist die über Anzapfungen der Ankerwicklung 23 entnommene und über einen Kondensator 27 dem Gleichrichter 28 zugeführte Wechselspannung (nach Anfahren des Motors mit einem Anlasser 26) ebenfalls praktisch gleichbleibend. Die Frequenz dieser Wechselspannung ist der Drehzahl n des Motors verhältnisgleich, daher nimmt der vom Gleichrich-ter 28 gelieferte Strom $J_2$ gemäß der Prinzipschal-tung nach Fig. 2 mit dieser Drehzahl n zu. Der Strom $J_2$ durchfließt eine Entregungswicklung 25, die der Erregerwicklung 24 entgegenwirkt und den Magnetfluß mit steigender Drehzahl n zunehmend schwächt.

In Fig. 8 ist eine andere Schaltung eines mit Feldschwächung arbeitenden Gleichstrommotors dargestellt, bei der eine gesonderte Entregungswicklung vermieden wird. Der Magnetfluß wird allein von einer Wicklung 30 erzeugt, die über einen Vorwiderstand 32 an die den Motor speisende konstante Spannung angeschlossen ist. Der Vorwiderstand 32 liegt außerdem am Ausgang eines Gleichrichters 36, der über einen Isoliertransformator 34, 35 und einen Kondensator 33 an Anzapfungen der Ankerwicklung 29 des Motors liegt. Der Kondensator 33 bildet zusammen mit den Induktivitäten des Isoliertransformators 34, 35 und der Ankerwicklung 29 einen Blindwi-derstand, der gemäß der Prinzipschaltung nach Fig. 3 wirkt, als unterhalb der Resonanzfrequenz eine mit der Drehzahl n der Maschine steigende Ausgangsspannung des Gleichrichters 36 ergibt. Nach Hochfahren des Motors mit einem Anlasser 31 ist bis zu einer gewissen Drehzahl n die vom Gleichrichter 36 gelieferte Spannung kleiner als der Spannungsabfall, den der Erregerstrom $J_3$ am Vorwiderstand 32 bewirkt, d. h. der Gleichrichter bleibt stromlos. Der über den Vorwiderstand 32 fließende Strom $J_4$ ist gleich dem in der Wicklung 30 fließenden Strom $J_3$, somit arbeitet der Motor mit konstanter Erregung. Erst wenn die Gleichrichterspannung den genannten Spannungsabfall übersteigt, liefert auch der Gleichrichter Strom und der Strom $J_4$ wird daher größer als der Strom $J_3$. Da jedoch die Summe der Spannungsabfälle an der Wicklung 30 und dem Vorwiderstand 32 gleich der speisenden Spannung bleiben muß, bedeutet dies eine Verringerung des Stromes $J_3$, also eine Feldschwächung, die mit dem Strom $J_4$, also mit der Drehzahl n zunimmt. Die beschriebene Anordnung besitzt den Vorteil, daß die Feldschwächung erst bei einer bestimmten Drehzahl n einsetzt, die fallweise durch Veränderbarkeit des Vorwiderstandes 32 und/oder des Isoliertransformators 34, 35 und/oder des Kondensators 33 eingestellt werden kann.

Bei dem durch Erregerwicklungen 37, 37a erregten Synchronmotor nach Fig. 9 ist ein Vorwiderstand zu diesen Wicklungen vermeidbar. Die Ankerwicklung 38 des Motors ist an die Klemmen R, S, T einer praktisch konstanten frequenzveränderbaren Dreiphasenspannung angeschlossen. Die hintereinandergeschalteten Erregerwicklungen 37, 37a werden über die Klemmen N, P mit einer konstanten Gleichspannung — z. B. aus dem Zwischenkreis eines den Motor speisenden Stromrichters — versorgt. Zwecks Potentialtrennung des die Feldschwächung bewirkenden Stromkreises vom Arbeitsstromkreis ist im Ständer eine zusätzliche Drehstromwicklung 39 vorgesehen, die eine praktisch konstante Spannung drehzahlproportionaler Frequenz liefert und über Kondensatoren 40 einen Gleichrichter 41 speist. Die Wirkungsweise dieser Anordnung entspricht der Schaltungsanordnung nach Fig. 3. Der Gleichrichter 41 ist ausgangsseitig an die Erregerwicklung 37a angeschlossen. Solange der Spannungsabfall, den der an den Klemmen N und P zugeführte Strom an der Erregerwicklung 37a hervorruft, größer ist als die Ausgangsspannung des Gleichrichters 41, bleibt dieser stromlos, der Motor arbeitet mit konstanter Erregung. Erst von einer gewissen Frequenz, d. h. Maschinendrehzahl an aufwärts, überwiegt die Gleichrichterspannung den genannten Spannungsabfall, der Strom in der Erregerwicklung 37a nimmt zu und demzufolge der Strom in der Erregerwicklung 37 ab. Wird der ohmsche Widerstand der Erregerwicklung 37a größer bemessen als dem Windungszahlverhältnis zur Erregerwicklung 37 entspricht, so ergibt sich auch hier eine mit einer gewissen Drehzahl einsetzende und dann mit ihr zunehmende Feldschwächung. Die erforderliche Widerstandserhöhung der Erregerwicklung 37a kann z. B. durch einen entsprechend schwächeren Querschnitt des Wicklungsdrahtes und/oder einen Vorwiderstand zwischen dieser Wicklung und der Klemme P erzielt werden.

Fig. 10 stellt die Schaltung eines permanentmagneterregten Synchronmotors dar. Ein im Läufer angeordneter Permanentmagnet 42 erzeugt einerseits einen Nutzfluß, der eine Spannung in der an den Drehstromklemmen R, S, T liegenden Ständerwicklung 43 induziert, andererseits einen Nebenschlußfluß, der als Gleichfluß eine weitere Ständerwicklung 44 durchsetzt. Wie aus der US-PS 28 02 959 bekannt, kann der die weitere Ständerwicklung 44 durchsetzende Nebenschlußfluß durch Mit- oder Gegenerregung entsprechend gesteuert werden. Auf diese Weise läßt sich der Nutzfluß mittelbar steuern. Diese Art der Nutzflußsteuerung durch Gegenerregung des Nebenschlußflusses wird bei dem in Fig. 10 dargestellten Synchronmotor angewendet. Die im Betrieb annähernd konstant angenommene frequenzveränderbare Klemmenspannung speist über induktive Blindwiderstände 45 einen Gleichrichter 46, der einen Strom J an die weitere Ständerwicklung 44 des Motors abgibt. Die Anordnung wirkt gemäß dem Prinzipschaltbild nach Fig. 1, d. h. mit steigender Frequenz nimmt der Strom J und damit die Gegenerregung des Nebenschlußflusses ab, dieser Fluß wächst also, was eine Verringerung des Nutzflusses zur Folge hat.

**Patentansprüche**

1. Elektrischer Motor mit veränderlicher Drehzahl, dem ein über wenigstens einen fallweise veränderbaren frequenzabhängigen Widerstand (27 ; 33-35 ; 40 ; 45) mit Wechselspannung von einer der Motordrehzahl verhältnisgleichen Frequenz gespeister. Gleichrichter (28 ; 36 ; 41 ; 46) zugeordnet ist und dessen Erregung durch den von dem Gleichrichter (28 ; 36 ; 41 ; 46) gelieferten Strom gesteuert ist, dadurch gekennzeichnet, daß die Erregeranordnung so ausgelegt ist, daß in einem größeren Drehzahlbereich bei einem Drehzahlanstieg der magnetische Nutzfluß derart geschwächt wird, daß die induzierte Spannung nur wenig oder gar nicht anwächst.

2. Elektrischer Motor nach Anspruch 1, dadurch gekennzeichnet, daß der Gleichrichter (28) eingangsseitig über vor- und/oder parallelgeschaltete Blindwiderstände (27) von Anzapfungen der Ankerwicklung (23) des Motors gespeist und ausgangsseitig mit einer Entregungswicklung (25) des Motors verbunden ist.

3. Elektrischer Motor nach Anspruch 1, dadurch gekennzeichnet, daß zumindest ein Teil seiner Erregerwicklung (30) über einen Vorwiderstand (32) an einer Erreger-Gleichspannung liegt und dieser Vorwiderstand (32) an den Gleichrichter (36) angeschlossen ist, der über wenigstens einen Kondensator (33) und einen Isoliertransformator (34, 35) von Anzapfungen der Ankerwicklung (2) des Motors gespeist ist.

4. Elektrischer Motor nach Anspruch 1, dadurch gekennzeichnet, daß ein Teil (37a) der durch eine konstante Gleichspannung gespeisten Erregerwicklung (37a, 37) an den Gleichrichter (41) angeschlossen ist, der eingangsseitig über wenigstens einen Kondensator (40) mit einer induzierten Wicklung (39) des Motors verbunden ist.

5. Elektrischer Motor nach Anspruch 1, dadurch gekennzeichnet, daß eine den magnetischen Nutzfluß durch sättigungs- oder durchflutungsbewirkte Beeinflussung eines Nebenschlußflusses steuernde Wicklung (44) vorgesehen und an den Gleichrichter (46) angeschlossen ist, der über vor- und/oder parallelgeschaltete Blindwiderstände (45) von der Klemmenspannung des Motors gespeist ist.

## Claims

. 1. A variable speed electric motor having associated therewith a rectifier (28 ; 36 ; 41 ; 46) supplied with alternating current of a frequency proportional to the speed of the motor through at least one frequency dependent resistor (27 ; 33-35 ; 40 ; 45) which can be varied as desired, and of which the excitation is controlled by the current supplied by the rectifier (28 ; 36.; 41 ; 46), characterised in that the excitation means is such that over a fairly large speed range the useful magnetic flux is weakened as the speed increases so that the induced voltage increases only a little or not at all.

2. An electric motor according to claim 1, characterised in that the rectifier (28) is supplied on the input side through series and/or parallel connected reactances (27) from tappings on the armature winding (23) of the motor and on the output side is connected to a de-excitation winding (25) of the motor.

3. An electric motor according to claim 1, characterised in that at least part of its excitation winding (30) is connected through a dropping resistor (32) to an exciting direct voltage and this dropping resistor (32) is connected to the rectifier (36), which is supplied from tappings on the armature winding (2) of the motor through at least one capacitor (33) and an isolating transformer (34, 35).

4. An electric motor according to claim 1, characterised in that a part (37a) of the excitation winding (37a, 37) supplied by a constant direct voltage is connected to the rectifier (41), which is connected on the input side to an induced winding (39) of the motor through at least one capacitor (40).

5. An electric motor according to claim 1, characterised in that a winding (44) controlling the useful magnetic flux by influencing a shunt flux by means of effects brought about by saturation or magnetomotive force. is provided and is connected to the rectifier (46) which is supplied from the terminal voltage of the motor through series and/or parallelconnected reactances (45).

## Revendications

1. Moteur électrique à vitesse de rotation variable, auquel est coordonné un redresseur (28 ; 36 ; 41 ; 46) alimenté en tension alternative d'une fréquence proportionnelle à la vitesse de rotation du moteur, à travers au moins une résistance (27 ; 33-35 ; 40 ; 45) fonction de la fréquence et qui est variable d'un cas à l'autre, moteur dont l'excitation est commandée par le courant fourni par le redresseur (28 ; 36 ; 41 ; 46), caractérisé en ce que le dispositif d'excitation est conçu de manière que, dans une plage relativement grande de la vitesse de rotation, le flux magnétique utile soit affaibli, lors d'une augmentation de la vitesse de rotation, de telle façon que la tension induite s'élève seulement peu ou ne s'élève pas du tout.

2. Moteur selon la revendication 1, caractérise en ce que le redresseur (28) est alimenté. côte entrée, par des prises de l'enroulement d'induit (23) du moteur, à travers des réactances (27) montées en série et/ou en parallèle. et est raccordé par sa sortie à un enroulement de désexcitation (25) du moteur.

3. Moteur selon la revendication 1, caractérise en ce qu'une partie au moins de son enroulement d'excitation (30) est connectée à travers une résistance série (32) à une tension continue d'excitation et cette résistance série (32) est connectée au redresseur (36), lequel est alimente par des prises de l'enroulement d'induit (2) du moteur à travers au moins un condensateur (33) et un transformateur d'isolement (34, 35).

4. Moteur selon la revendication 1, caractérise en ce qu'une partie (37a) de l'enroulement d'excitation (37a, 37), alimenté par une tension continue constante, est raccordée au redresseur (41) lequel est relié par son entrée, à travers au moins un condensateur (40), à un enroulement d'induction (39) du moteur.

5. Moteur selon la revendication 1, caractérise par la prévision d'un enroulement (44) qui commande le flux magnétique utile en agissant par saturation ou par flux de courant magnétique sur un flux de dérivation et qui est raccordé au redresseur (46). lequel est alimenté par la tension aux bornes du moteur à travers des réactances (45) montées en série et/ou en parallèle.

FIG 1

FIG 2

FIG 3

FIG 4

FIG 5

FIG 6

FIG 7

FIG 8

FIG 9

FIG 10